# FASCICULE DE BREVET EUROPEEN

(11) **EP 1 300 612 B1**
(45) Date de publication et mention de la délivrance du brevet: **18.07.2007**
(21) Numéro de dépôt: 02292458.3
(22) Date de dépôt: 04.10.2002
(51) Int. Cl.: F16H 61/16

(54) **Dispositif de commande pour transmission automatique d'un véhicule automobile**
Steuereinrichtung für ein automatisches Getriebe eines Kraftfahrzeuges
Control apparatus for automatic transmission of a motor vehicle

(30) Priorité: 04.10.2001 FR 0112739
(43) Date de publication de la demande: 09.04.2003
(73) Titulaire: Renault s.a.s., 92100 Boulogne Billancourt (FR)
(72) Inventeur: Frappa, Sophie, 75013 Paris (FR); Pouyau, Laurent, 92290 Chatenay Malabry (FR)

(56) Documents cités:
- EP-A- 0 391 387
- EP-A- 0 467 773
- FR-A- 2 732 276
- US-A- 6 035 735
- US-A1- 2001 025 538
- PATENT ABSTRACTS OF JAPAN A

## Description

La présente invention concerne un dispositif de commande d'une transmission automatique pour véhicule automobile comme défini dans le préambule de la revendication 1 et connu du FR-A-2732 276. Elle concerne aussi un véhicule à transmission automatique.

Dans l'état de la technique, on a déjà décrit des dispositifs de transmission automatique qui offrent des facilités de conduite. Dans une première solution, une boîte de vitesses automatisée est commandée à l'aide d'un calculateur de boîte de vitesses automatique de sorte qu'en fonction de situations de conduite, le rapport convenable de la boîte de vitesses est automatiquement sélectionné et placé, le régime du moteur thermique et la manipulation de l'embrayage piloté étant éventuellement contrôlés dans le même temps. En outre, dans le document EP-A-0.391.387, il est décrit un système de détection de l'état de conduite à transmission automatique qui ne comporte pas de commande impulsionnelle. Le système décrit comporte un capteur de déplacement du véhicule ainsi qu'un capteur de régime du moteur thermique.

Dans une seconde solution, le véhicule à transmission manuelle comporte une boîte de vitesses robotisée dans laquelle les rapports échelonnés sont modifiés de manière séquentielle sous la commande manuelle par le conducteur agissant sur un levier de changement de vitesses en mode impulsionnel. Un tel levier présente une seule position stable ou position "0" et deux positions instables dites positions "+" et "-". Quand le calculateur de boîte de vitesses reçoit une commande du levier de changement de vitesses, il décrémente ou incrémente la succession des rapports de boîte disponibles qui sont classiquement les cinq rapports de vitesse d'avance, la position neutre et le rapport de marche arrière, selon la manipulation du levier de changement de vitesses en position "-" ou en position "+". Un tel levier de changement de vitesses et son contrôleur constituent ensemble une commande en mode impulsionnel.

Un but de la présente invention est de permettre d'utiliser une commande en mode impulsionnel tout en conservant la possibilité d'une transmission automatique dans laquelle le choix du rapport est laissé à l'appréciation du calculateur

A cette fin, la présente invention concerne un dispositif de commande d'une transmission automatique pour véhicule automobile comme défini dans la revendication 1. transmission travaille en mode manuel ou par le calculateur de boite de vitesses travaillant en mode automatique.

Selon un autre aspect de l'invention, l'unité centrale comporte un moyen pour exécuter, périodiquement ou de manière asynchrone en fonction des changements de situations de conduite, un test pour déterminer si un changement de rapport de boîte de vitesses est autorisé pour un état de la situation de conduite en cours présentée dans un registre d'état en comparant la situation de conduite en cours avec une situation de conduite autorisée préenregistrée dans la mémoire. L'unité centrale produit un signal d'autorisation de changement de rapport de boîte de vitesses qui est transmis à un moyen d'activation du calculateur de boîte de vitesses de sorte qu'il soit activé si le test est positif, le signal d'autorisation étant aussi transmis au tableau de bord pour signaler son état au conducteur et notamment pour produire une alarme si le test est négatif.

Selon un autre aspect de l'invention, les registres d'état présentent chacun une valeur prise parmi les valeurs suivantes :
- le registre d'état d'enfoncement de la pédale de frein qui prend l'une des valeurs <Cfrein0> indicatrice que la pédale de frein n'est pas actionnée ou <Cfrein1> indicatrice de l'enfoncement de la pédale de frein par le conducteur ;
- le registre d'état de commande impulsionnelle du levier de commande impulsionnelle qui prend l'une des valeurs <Clevier0> quand le levier n'est pas manipulé par le conducteur et qu'il est donc dans sa seule position stable "0", <Clevier+> ou <Clevier-> quand le levier est manipulé par le conducteur dans l'une des positions instables "+" ou "-" ;
- le registre d'état de commande du démarreur qui prend l'une des valeurs <Cclé0> quand le démarreur n'a pas encore été actionné, <Cclé1> quand le conducteur a manoeuvré la clé sur la position "plus avant contact" et <Cclédem> quand il a dépassé la position "plus avant contact" pour mettre le démarreur sous tension ;
- le registre d'état de commande du sélecteur de mode de commande de la transmission qui prend l'une des valeurs <CmodeAuto> quand le conducteur a sélectionné la position "Auto" du sélecteur parce qu'il veut que le calculateur de changement de rapport de boîte de vitesses exécute le programme de changement automatique de rapport de boîte de vitesses qui y est enregistré, et c'est la valeur par défaut qui est présentée, et <CmodeManuel> quand le conducteur a choisi un mode manuel de fonctionnement dans lequel le changement de rapport de boîte de vitesses est déterminé par l'actionnement manuel du levier de commande manuelle impulsionnelle ;
- le registre d'état de commande du sélecteur de mode d'adhérence de la transmission automatique qui prend l'une des valeurs <Cadher0> quand le sélecteur a été placé en position "Normal" pour que la transmission travaille en adhérence normale, et c'est la valeur par défaut qui est présentée ou <Cadher1 > quand le sélecteur a été placé en position "Faible" pour obtenir le fonctionnement de la transmission dans un mode de faible adhérence, sur route mouillée ou sous verglas ;
- le registre d'état de vitesse de déplacement du véhicule qui prend l'une des valeurs <Evit0> quand le véhicule est à l'arrêt, que le moteur soit en fonctionnement ("moteur tournant") ou qu'il soit éteint, <Evit1> quand le véhicule avance à une allure réduite, par exemple lors du décollage du véhicule ou en manoeuvres de parking, et <Evit2> quand il se déplace à des vitesses de roulage ;
- le registre d'état du régime moteur qui est mesuré en mesurant la vitesse de rotation de l'arbre de sortie du moteur thermique, et qui prend les valeurs <Emot0> quand le moteur est à l'arrêt et <Emot1> quand le moteur est "tournant" ;
   l'ensemble des valeurs prises étant, périodiquement ou de manière asynchrone en fonction des situations de conduite, scruté et analysé sur le registre d'entrée du moyen d'autorisation de changement de rapport au niveau de son registre d'entrée qui maintient un vecteur de situation de conduite.

L'invention concerne aussi un véhicule à transmission automatique du genre comportant une transmission automatique, caractérisé en ce qu'il comporte de plus :
- un dispositif manuel de changement de vitesses comportant un levier à une seule position stable à commande impulsionnelle ;
- un dispositif de commande d'une transmission automatique défini selon au moins l'une des revendications précédentes.

D'autres caractéristiques et avantages de l'invention apparaîtront à la lecture de la description détaillée qui suit pour la compréhension de laquelle on se reportera aux dessins annexés dans lesquels :
- la figure 1 est un schéma bloc des moyens essentiels d'un mode préféré de réalisation de l'invention ;
- la figure 2 est un schéma bloc de la partie du dispositif de commande qui met en oeuvre l'invention ;
- la figure 3 est un schéma bloc d'une partie du dispositif de la Figure 1 ;
- la figure 4 est un schéma bloc d'une autre partie du dispositif de la figure 1 ;
- la figure 5 est un schéma bloc d'une autre partie du dispositif de la figure 1 ;
- la figure 6 est un schéma bloc d'une autre partie du dispositif de la figure 1.

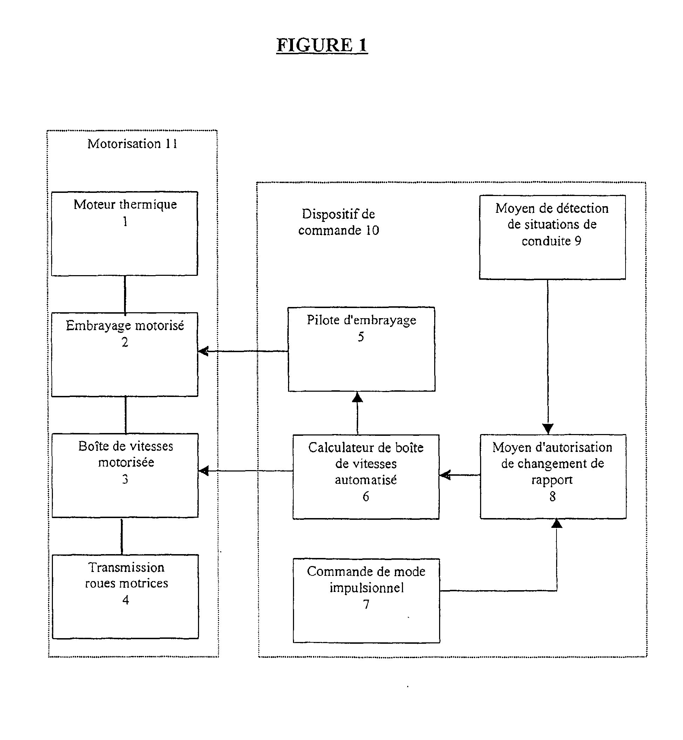

A la Figure 1, on a représenté un schéma bloc des moyens essentiels d'un mode préféré de réalisation de l'invention. Le véhicule comporte un moyen de motorisation 11 et son dispositif de commande de transmission automatique 10. Le moyen de motorisation comporte essentiellement un moteur thermique 1 dont l'arbre de sortie est connecté à un embrayage motorisé 2. L'embrayage motorisé 2 comporte essentiellement un moyen moteur pour actionner le plateau d'embrayage d'un embrayage connu en fonction de la commande d'embrayage qu'il reçoit. L'arbre de sortie de l'embrayage motorisé est connecté au primaire d'une boîte de vitesses motorisée 3. La boîte de vitesses motorisée 3 comporte essentiellement un moyen moteur pour actionner les fourchettes de manipulation des pignons de changement de rapports de boîte d'une boîte de vitesses connue en fonction de la commande de rapport qu'elle reçoit. L'arbre de sortie de la boîte de vitesses motorisée 3 est connecté par un organe de transmission mécanique aux roues motrices 4.

Le dispositif de commande de transmission automatique 10 comporte essentiellement un pilote d'embrayage 5 dont la sortie électronique de commande produit un signal de commande des actionneurs de l'embrayage motorisé 2 et un calculateur de boîte de vitesses automatisé 6 dont la sortie électronique de commande produit un signal de commande pour les actionneurs de la boîte de vitesses motorisée 3. Ces deux composants du dispositif de commande de transmission automatique 10 sont bien connus dans l'état de la technique et ne seront pas plus décrits. Selon l'invention, le dispositif de commande de transmission automatique 10 comporte aussi une commande de mode impulsionnel 7 équipée d'un levier de changement de vitesses à une seule position stable "0" et d'un interpréteur de commande qui est connecté en entrée d'un moyen d'autorisation de changement de rapport 8.

Le moyen d'autorisation de changement de rapport 8 comporte aussi une entrée sur laquelle sont reçues des informations de détection de situations de conduite produite par un moyen de détection de situations de conduite 9. Le moyen d'autorisation de changement de rapport 8 comporte une sortie qui selon un protocole d'autorisation produit à destination du calculateur de boîte de vitesses automatisée 6 des ordres de changement de vitesses seulement si les conditions de l'environnement détecté sont autorisées.

Un avantage de cette solution consiste à éviter de faire gérer directement par la fonction émettrice, par exemple par des moyens mécaniques peu facilement contrôlables, les situations dans lesquelles une commande ne doit pas être émise.

Un exemple d'une telle situation est celle dans laquelle une manoeuvre du levier de changement de vitesses impulsionnel est intempestive, par exemple lors d'une fausse manoeuvre. Si le véhicule se trouve moteur arrêté, il n'est pas utile que les actionneurs de la boîte de vitesses 3 reçoivent des ordres d'activation.

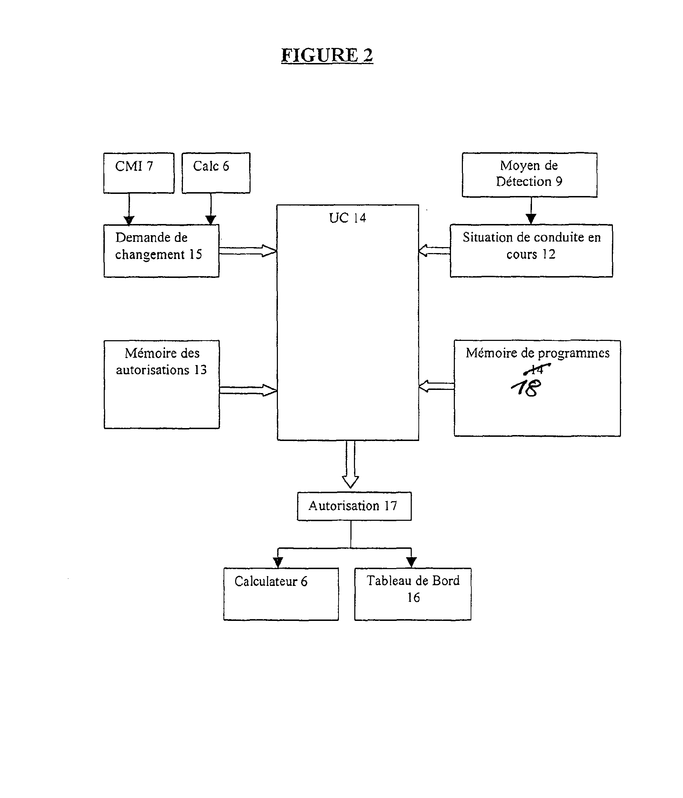

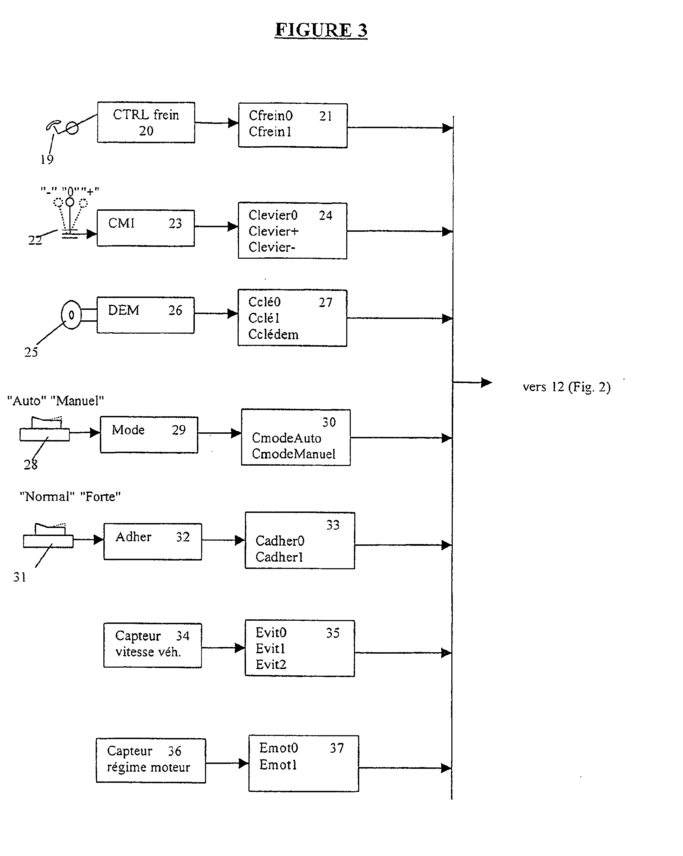

A la Figure 2, on a représenté un schéma bloc de la partie du dispositif de commande 11 de la Figure 1 qui met plus particulièrement en oeuvre l'invention. A la Figure 2, le moyen d'autorisation 8 de la Figure 1 est implémenté essentiellement dans une unité centrale d'un calculateur embarqué à bord du véhicule. Cette unité centrale peut, selon les modes de réalisation, être réalisée sur un contrôleur spécifique ou répartie sur une ou plusieurs unités centrales déjà dévolues à d'autres fonctions de contrôle du véhicule.

L'ensemble des situations de conduite que le moyen de détection 9 peut parcourir est enregistré dans une mémoire 13 des situations de conduite du moyen d'autorisation de changement de rapport 9. Un programme est enregistré dans une mémoire de programmes 18 du moyen 8 et qui est exécuté au moyen de l'unité centrale 14. L'unité centrale 14 reçoit la demande de changement de rapport en cours par un organe de détermination d'une demande de changement de rapport 15 qui est connecté aux sorties du contrôleur 7 de commande de mode impulsionnel et du calculateur 6 de boîte de vitesses. L'unité centrale 14 reçoit aussi l'information d'un registre 12 qui maintient une variable de situation de conduite en cours. L'unité centrale teste la situation de conduite détectée avec une situation autorisée ou interdite sélectionnée en fonction de la demande de changement de rapport présentée en entrée du moyen d'autorisation 9. Si la situation de conduite en cours 12 correspond à une situation autorisée pour le changement de rapport de boîte de vitesses, l'unité centrale 14 produit en sortie une variable d'autorisation maintenue dans un registre 17 d'autorisation qui est, dans un mode préféré de réalisation transmis au calculateur 6 de boîte de vitesses automatisé pour que le changement de rapport de boîte de vitesses soit opéré si l'autorisation est positive, ainsi que les diverses opérations qui, selon les modes de réalisation, accompagnent le changement de rapport de boîte de vitesses, notamment, le changement de régime moteur, la manoeuvre du plateau d'embrayage, etc.

La variable d'autorisation du registre 17 d'autorisation est aussi, dans un mode préféré de réalisation, transmise au tableau de bord 16 qui équipe le véhicule, de sorte que le résultat du test d'autorisation et éventuellement le signalement des états avant test d'autorisation et après test d'autorisation soient signalés au conducteur et/ou aux organes automatiques qui équipent, selon les modes de réalisation de l'invention, le véhicule pour surveiller et/ou contrôler l'attitude du véhicule. Dans un mode particulier de réalisation, le tableau de bord est équipé d'afficheurs à base de voyants qui seront décrits plus loin.

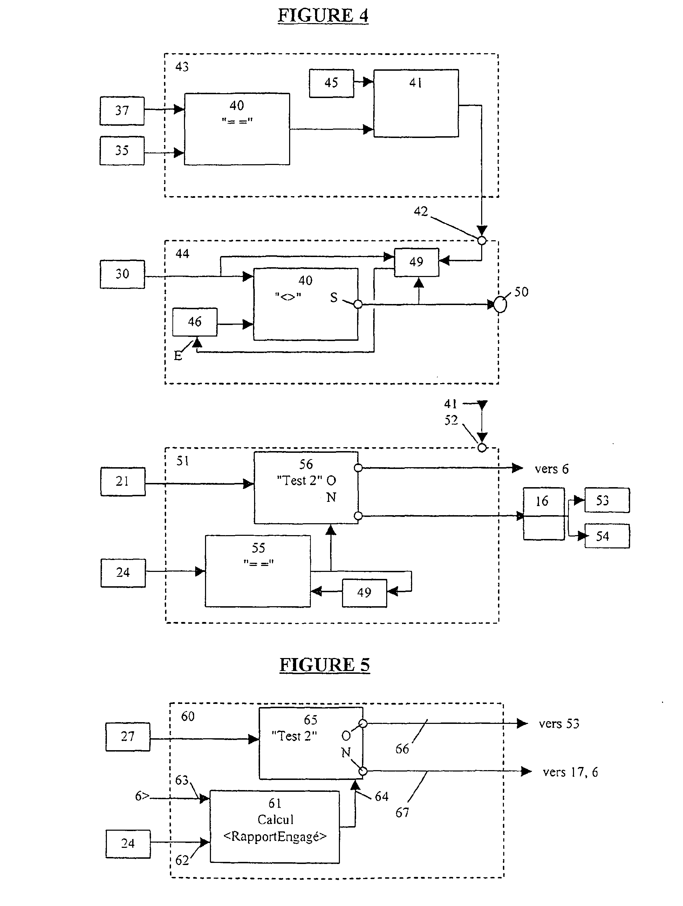

A la Figure 3, on a représenté un schéma bloc de la partie de la Figure 1 qui correspond au moyen de détection de situations de conduite 9 dans un mode préféré de réalisation de l'invention.

Le moyen de détection des situations de conduite comporte dans le mode de réalisation de la Figure 3 ;
- un détecteur 20 de manoeuvre de la pédale de frein 19 qui agit sur le système de freinage du véhicule ;
- un détecteur 23 de commande manuelle impulsionnelle CMI de la position d'un levier de commande de changement de rapport 22 qui, en mode manuel, agit sur le changement de rapport de boîte de vitesses ;
- un détecteur 26 de position de la clé de contact 25 sur le démarreur et qui agit sur la mise sous tension des appareils électriques connectés à la batterie du véhicule après contact ;
- un détecteur 29 de l'état de commutation d'un sélecteur 28 de mode de commande du changement de rapports de la boîte de vitesses qui permet d'indiquer au dispositif de commande de l'invention si le conducteur commande la transmission dans un mode automatique où le calculateur 6 (Figure 1) prend le contrôle du choix du rapport en mode automatique ou si le conducteur commande la transmission dans un mode manuel impulsionnel dans lequel il commande lui-même la décrémentation ou l'incrémentation de la séquence de changement de rapports de la boîte de vitesses, cette séquence de changement de rapports étant exécutée sous l'effet de la manipulation du levier 22 à une seule position stable "0" par le calculateur de boîte de vitesses 6 (Figure 1) dont le programme de fonctionnement en mode automatique a été préalablement inhibé pendant la durée de sélection du mode manuel impulsionnel par le sélecteur de mode 28 ;
- un détecteur 32 de l'état de commutation d'un sélecteur 31 de mode de fonctionnement de la transmission automatique en mode "faible adhérence" ou en mode "adhérence normale" ;
- un capteur 34 de vitesse de déplacement du véhicule qui produit une pluralité de niveaux de vitesse de marche du véhicule ; et
- un capteur 36 de régime moteur thermique qui produit une pluralité de niveaux de régime moteur.

Quand il est manoeuvré, chacun des détecteurs ou capteurs précités ci-dessus produit une valeur prise parmi plusieurs valeurs prédéterminées qui est enregistrée dans un registre d'état, les registres d'état étant respectivement :
- le registre 21 d'état d'enfoncement de la pédale de frein qui prend l'une des valeurs Cfrein0 indicatrice que la pédale de frein n'est pas actionnée ou Cfrein1 indicatrice de l'enfoncement de la pédale de frein par le conducteur ;
- le registre 24 d'état de commande impulsionnelle du levier de commande impulsionnelle 22 qui prend l'une des valeurs Clevier 0 quand le levier n'est pas manipulé par le conducteur et qu'il est donc dans sa seule position stable "0", Clevier+ ou Clevier- quand le levier est manipulé par le conducteur dans l'undes positions instables "+" ou "-" ;
- le registre 27 d'état de commande du démarreur 26 qui prend l'une des valeurs Cclé0 quand le démarreur n'a pas encore été actionné, Cclé1 quand le conducteur a manoeuvré la clé sur la position "plus avant contact" et Cclédem quand il a dépassé la position "plus avant contact" pour mettre le démarreur sous tension ;
- le registre 30 d'état de commande du sélecteur 31 de mode de commande de la transmission qui prend l'une des valeurs CmodeAuto quand le conducteur a sélectionné la position "Auto" du sélecteur 28 parce qu'il veut que le calculateur - (Figure 1) de changement de rapport de boîte de vitesses exécute le programme de changement automatique de rapport de boîte de vitesses qui y est enregistré, et c'est la valeur par défaut qui est présentée, et CmodeManuel quand le conducteur a choisi un mode manuel de fonctionnement dans lequel le changement de rapport de boîte de vitesses est déterminé par l'actionnement manuel du levier de commande manuelle impulsionnelle 22 ;
- le registre 33 d'état de commande du sélecteur 32 de mode d'adhérence de la transmission automatique qui prend l'une des valeurs Cadher0 quand le sélecteur 32 a été placé en position "Normal" pour que la transmission travaille en adhérence normale, et c'est la valeur par défaut qui est présentée ou Cadher1 quand le sélecteur 32 a été placé en position "Faible" pour obtenir le fonctionnement de la transmission dans un mode de faible adhérence, sur route mouillée ou sous verglas ;
- le registre 35 d'état de vitesse de déplacement du véhicule qui prend l'une des valeurs Evit0 quand le véhicule est à l'arrêt, que le moteur soit en fonctionnement ("moteur tournant") ou qu'il soit éteint, Evit1 quand le véhicule avance à une allure réduite, par exemple lors du décollage du véhicule ou en manoeuvres de parking, et Evit2 quand il se déplace à des vitesses de roulage ;
- le registre 37 d'état du régime moteur qui est mesuré en mesurant la vitesse de rotation de l'arbre de sortie du moteur thermique 1 (Figure 1), et qui prend les valeurs Emot0 quand le moteur est à l'arrêt et Emot1 quand le moteur est "tournant".

L'ensemble des valeurs prises est, périodiquement ou de manière asynchrone en fonction des situations de conduite, scruté et analysé sur le registre d'entrée du moyen d'autorisation de changement de rapport 8 (Figure 1) au niveau de son registre d'entrée 12 qui maintient ainsi un vecteur de situation de conduite en cours (Figure 2). Le programme exécuté par l'unité centrale 14 réalise alors le test des situations autorisées en fonction des données d'autorisation enregistrées dans la mémoire des autorisations 13, ainsi qu'il a déjà été décrit.

On va maintenant donner le détail de ce test dans un mode particulier de réalisation, donné à titre d'exemple illustratif et qui utilise les paramètres de situation de conduite décrits à l'aide de la figure 3 et qui sont maintenus dans les registres précités. Par ce moyen, l'invention permet de contrôler le changement de rapport de boîte de vitesses de façon à éviter des changements de rapport dans des situations de conduite dangereuses pour la sécurité du véhicule.

### MOTEUR Arrêté

Ainsi qu'il est décrit à l'aide de la Figure 4, le dispositif de commande de l'invention comporte un premier moyen de test d'autorisation 44 qui est activé quand le véhicule est en fonctionnement, moteur arrêté. A cette fin, le premier moyen de test d'autorisation 44 coopère avec un moyen de détection de l'état "moteur arrêté" 43. Le dispositif de commande de l'invention par son moyen d'autorisation 8 (Figure 1) examine la situation de conduite. Si le moteur est détecté dans son état arrêté, le capteur de régime moteur 36 inscrit la valeur Emot0 dans le registre d'état 37 et le capteur de vitesse véhicule 34 produit une valeur d'état Evit0 sur son registre d'état 35. Les valeurs des deux registres 37 et 35 sont donc testées par le moyen de détection 43 de l'état "moteur arrêté". Le moyen de détection 43 comporte un opérateur 40 de comparaison "==" et exécute l'opération suivante :

```
 Si ((Emot == Emot0) ET (Evit == Evit0)) Alors
      Emoteurlni = Emoteur0 ;
```

de sorte qu'une sortie de l'opérateur 40 qui maintient la variable d'état Emoteurlni à la valeur Emoteur0 indique l'état de moteur arrêté. La variable de sortie Emoteurlni est connecté à une première entrée d'une porte ET 41 dont une seconde entrée reçoit la constante Emoteur0 enregistrée dans une mémoire 45, de sorte que la sortie 42 de la porte ET 41 active le premier moyen 44 de test d'autorisation contenu dans le dispositif de commande de l'invention.

Dans l'état "moteur arrêté", le premier moyen 44 de test d'autorisation étant activé comme décrit ci-dessus, aucun changement de mode (sélecteur de mode 28 (Figure 3) pour passer du mode automatique en position "Auto" au commande en mode impulsionnel "CMI" en position "Manuel") ne peut être pris en compte. Pour exécuter cette fonction, le premier moyen de test d'autorisation comporte :
◆ un registre 46 qui maintient à sa sortie S une variable d'état CchangementModelni représentative d'une valeur initiale (valant CmodeAuto ou CmodeManuel) du registre d'état 30 (Figure 3) de changement de mode de transmission ;
◆ un registre 47 qui reçoit la valeur en cours du registre d'état 30 et qui maintient une variable CchangementMode et qui, comme on l'a indiqué précédemment, prend l'une des valeurs CmodeAuto ou CmodeManuel selon la manoeuvre du sélecteur 28, et
◆ un opérateur 48 de test de différence "<>" qui exécute l'opération :

```
 Si (CchangementMode <> CchangementModelni) Alors
      InterdireChangementMode() ;
```

Dans le cas où l'entrée 42 d'inhibition du premier moyen de test 44 n'est pas activée, c'est-à-dire quand le moteur n'est pas arrêté, la valeur contenue dans le registre 47 est enregistrée dans le registre 46 pour le remettre à jour grâce à un circuit logique 49 qui transmet la valeur CchangementMode sur l'entrée d'écriture E du registre 46, si l'entrée 42 d'inhibition est inactive et si le changement de mode est détecté en sortie S de l'opérateur de différence 48.

La sortie de S de l'opérateur de différence 48 est connectée d'une part, ainsi qu'il a été décrit, à une entrée convenable du circuit 49 de remise à jour du registre d'état initial 46 pour le changement de mode et d'autre part, à la sortie 50 du premier moyen de test 44 quand il est activé de sorte qu'un message d'alarme est transmis au contrôleur du tableau de bord (16, Figure 2) pour informer les systèmes de contrôle de bord et/ou le conducteur qu'un changement de mode est interdit.

Le dispositif de commande de l'invention comporte aussi un second moyen de test d'autorisation 51 qui est activé quand le véhicule est en fonctionnement, moteur arrêté. A cette fin, le second moyen de test d'autorisation 51 coopère avec le moyen de détection de l'état "moteur arrêté" 43 déjà décrit et comporte une entrée d'inhibition 52 analogue à l'entrée 42 décrit pour le premier moyen d'autorisation 44. Le second moyen de test d'autorisation 51 comporte un premier opérateur 55 qui reçoit sur une première entrée la variable d'état CLevier issue du registre 24 et sur une seconde entrée la variable interne au second moyen 51 RapportEngagé, enregistrée dans une mémoire 57 à la valeur qu'elle avait lors de la période précédente. Le premier opérateur 55 produit en sortie une variable qui correspond à la nouvelle valeur de la variable interne d'entrée RapportEngagé en fonction de la séquence prédéterminée des rapports de boîte de vitesses, en incrémentant la séquence de un pas si Clevier vaut Clevier+ si le levier de commande Manuelle en mode impulsionnel a été déplacé sur la position instable "+", en décrémentant la séquence de un pas si Clevier vaut Clevier- si le levier de commande Manuelle en mode impulsionnel a été déplacé sur la position instable "-". Cette nouvelle valeur de RapportEngagé est alors écrite dans la mémoire 57.

Le second moyen 51 comporte aussi un second opérateur 56 qui reçoit les variables d'état respectivement Cfrein, issue du registre 21 et CLevier issue du registre 24. L'opérateur 56, noté "Test 2" au dessin, exécute l'opération logique :

```
 Si (

    (Cfrein == CfreinAppuyé) ET
    (RapportEngagé == "1") OU
    (RapportEngagé == "R") OU
    (RapportEngagé == "N")
  ) Alors
 Autorisation =1 ;
 Sinon
 Autorisation = 0;
```

et la variable interne Autorisation est transmise comme valeur d'activation au calculateur de changement de rapport 6 si Autorisation = 1 (sortie O de l'opérateur 56 active) ou exclusivement au contrôleur de Tableau de Bord 16 si Autorisation = 0 (sortie N de l'opérateur 56 active).

Dans ce dernier cas qui correspond à celui où le conducteur demande l'engagement d'un rapport de boîte de vitesses N (neutre), R (marche arrière) ou 1 (première vitesse) sans pied sur le frein alors l'unité centrale 14 signale par le registre d'autorisation 17 et sa connexion au contrôleur du Tableau de bord 16 au conducteur que sa demande est refusée :
◆ en faisant clignoter un afficheur en plaçant une variable d'état Evoyantrapport à la valeur Evr1 commandant le clignotement d'un voyant indicateur 53 de l'état de rapport engagé sur le Tableau de bord 16 pour alerter le conducteur de la mauvaise manipulation ;
◆ en allumant un pictogramme "pied sur le frein" 54 en plaçant une variable d'état Evoyantfrein à la valeur Evf1 commandant l'allumage du pictogramme 54 sur le Tableau de bord 16 pour informer en plus le conducteur de la cause du refus.

Moteur arrêté, le conducteur peut engager tous les rapports tant qu'il appuie sur le frein.

### Conditions de démarrage moteur

A la Figure 5, on a représenté un troisième moyen de test d'autorisation 60 qui comporte essentiellement deux opérateurs, respectivement le premier opérateur 61 de calcul du rapport engagé qui produit une variable interne RapportEngagé indicatrice du rapport engagé, et un second opérateur de test d'autorisation 65. La variable interne RapportEngagé est calculée de la même manière que ce qui a été décrit avec l'opérateur 55 du second moyen de test d'autorisation 51. On note cependant que cette variable, selon les modes de réalisation, peut être produite par le calculateur 6 de rapport de boîte de vitesses directement. A cette fin, le premier opérateur 61 de calcul de RapportEngagé comporte une première entrée 63 connectée à une sortie convenable du calculateur 6 et une seconde entrée 62 connectée à la borne de lecture du registre 24 de changement de rapport Clevier. Une borne de sortie 64 est connectée à une première borne d'entrée du second opérateur 65 dont une seconde borne d'entrée est connectée à la borne de lecture du registre 27 qui indique une demande de démarrage du moteur, une variable d'état Cclé étant placée à la valeur Cclédém. Le second opérateur 65 exécute une opération logique définie par :

```
 Si ((Cclé == Cclédém) ET (RapportEngagé =="N")) Alors
     Autorisation = 1
 Sinon
     Autorisation =0;
```

La variable interne Autorisation est transmise en sortie du troisième moyen de test d'autorisation 60 de sorte que, si une première borne de sortie 66 ("O)" est active elle transmet la valeur "1" de Autorisation au calculateur 6 de boîte de vitesses de sorte que le démarrage est possible, et si une seconde borne de sortie 67 ("N") est active, elle transmet la valeur Evr1 à la variable d'état EVoyantRapport qui commande l'activation du voyant 53 au tableau de bord 16, en indiquant au conducteur et/ou au système de conduite automatisé que le démarrage du moteur est interdit tant que le rapport de boîte n'est pas sur le neutre "N".

### Fonctionnement de la commande moteur tournant

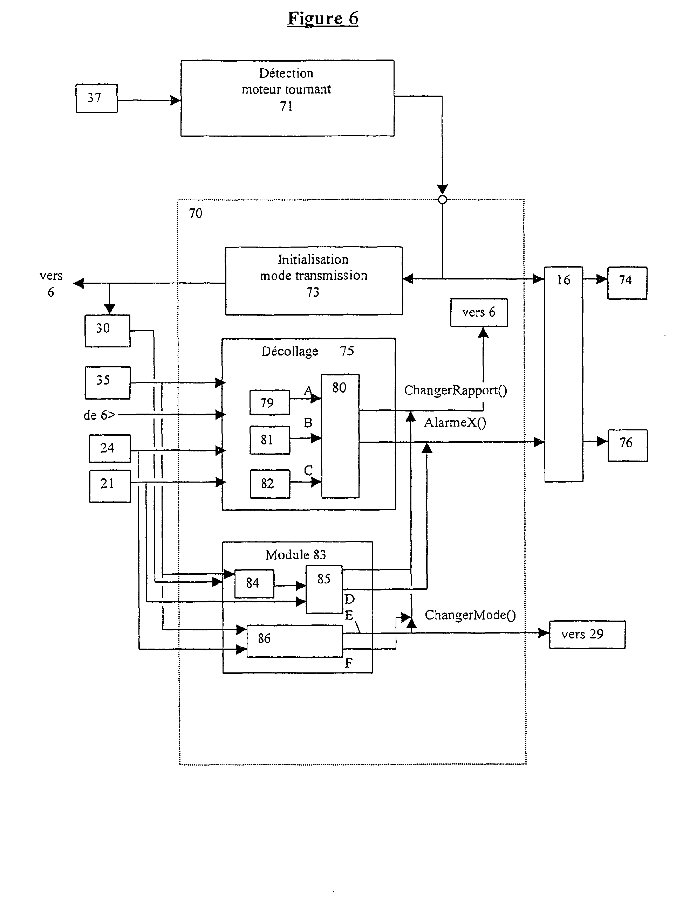

A la Figure 6, on a représenté le moyen de test 70 d'autorisation de changement de rapport de boîte de vitesses quand le véhicule est à moteur tournant.

Dans le mode de réalisation représenté, un circuit de détection du moteur tournant 71 reçoit la variable d'état Emot, produite par la lecture du registre 37, et qui vaut la valeur Emot1 représentative d'un régime moteur au moins égal au régime de ralenti. Dans ce cas, le moyen de test 70 est activé et la construction du circuit de détection 71, dont la sortie 72 produit un signal d'activation du moyen de test 70, est analogue à celle du circuit décrit à l'aide de la Figure 4 et ne sera pas plus décrit.

Juste après le démarrage du moteur thermique 1 du véhicule, le moyen de test 70 comporte un moyen 73 pour initialiser le registre de sélection de mode 30 en mode automatique, de sorte que la variable d'état Cmode prend la valeur CmodeAuto chargée dans le registre 30.

A partir de cette initialisation, le changement de mode de transmission opéré à l'aide du sélecteur 28 ("Auto" et "Manuel") est possible quel que soit le rapport engagé ; la commande "changement de mode" est prise en compte tout le temps quand le moteur est tournant et qu'il n'y a pas simultanément une autre commande du levier 22.

Après le démarrage du moteur, informé par le moyen 73 d'initialisation du registre de sélection de mode 30, le calculateur de changement de rapport 6 place la boîte de vitesses 3 (Figure 1) sur le rapport neutre "N". Une variable d'état RapportEngagé est donc placée à la valeur "N". Enfin, la sortie du moyen d'initialisation au démarrage 71 est aussi connectée par le contrôleur de tableau de bord 16 à un afficheur spécifique 74 au tableau de bord qui informe en permanence le conducteur du mode actif (automatique ou manuel (impulsionnel) ).

Le moyen de test 70 comporte ensuite un moyen 75 pour engager un rapport permettant de faire décoller le véhicule, le conducteur devant appuyer sur le frein.

Le moyen 75 comporte un premier opérateur qui, quelque soit le mode de transmission sélectionné par le sélecteur de mode 29, exécute la fonction :

```
 Si (
     ((Clevier == Clevier+) OU (Clevier == Clevier-))
     ET
     ((RapportEngagé == "N") OU (RapportEngagé == "R"))
     ET
     (Evit == Evit0)
  ) Alors
     TesterEtatFrein();
```

On remarque que selon le mode de transmission le premier test de la fonction sur l'état du levier de changement de rapport est testé seulement si le registre 30 enregistre Cmode = CmodeManuel, et dans le cas ou il enregistre Cmode = CmodeAuto, le calculateur 6 transmet seulement l'information qu'un changement de rapport a été demandé, le signe du changement étant indifférent.

Ensuite, on remarque que le premier opérateur 79 exécute une seconde fonction de test de l'état du freinage TestEtatFrein(), qui est exécuté par un second opérateur 80 qui exécute la fonction :

```
 Si (Cfrein == Cfrein1) Alors
     ChangerRapport();
 Sinon
     AlarmeA();
```

Cet opérateur comporte deux autres entrées B et C qui seront décrites plus loin. Si le test exécuté par le second opérateur est positif, le moyen d'autorisation 70 exécute une fonction ChangerRapport() qui est transmise au calculateur 6 de changement de rapport de boîte de vitesses ainsi qu'il est représenté à la Figure 6. Si le test exécuté par le second opérateur 80, sur l'activation du premier opérateur 79 sur la borne d'entrée A du second opérateur 80, est négatif, le moyen d'autorisation 70 exécute une fonction AlarmeA() qui est transmise par le contrôleur de tableau de bord 16 à un afficheur d'alarme 76 sur le tableau de bord. Si le conducteur a le pied sur le frein (Efrein == Efrein1) et que la vitesse du véhicule est suffisamment faible (Evit == Evit0), le calculateur 6 de changement de rapport engage le rapport demandé (neutre "N" ou marche arrière "R"). Dès que la demande de changement de rapport est acceptée, elle est affichée au tableau de bord en faisant clignoter l'afficheur 76 ; dès que le changement de rapport est réalisé (le rapport est effectivement engagé dans la boîte), le contrôleur 16 du tableau de bord commande l'allumage en fixe de l'afficheur 76.

Si le conducteur a oublié d'appuyer sur le frein (Cfrein == Cfrein0), alors le contrôleur 16 de tableau de bord commande l'afficheur 76 de sorte que le conducteur est averti qu'il doit appuyer sur le frein et l'afficheur 76 clignote pendant une durée prédéterminée au tableau de bord pour lui indiquer qu'il a fait une mauvaise manipulation. Le changement de rapport ne sera pas effectué par le calculateur 6.

Le moyen 75 de décollage du véhicule comporte aussi un opérateur 81 dont les bornes d'entrée reçoivent les informations précitées de situation de conduite, particulièrement les informations indiquées dans les variables d'état RapportEngagé et Evit, et qui exécute la fonction suivante :

```
 Si (RapportEngagé == "R") ET (Evit == Evit0) Alors
     TesterEtatF.rein() ;
```

Quand le test effectué par cet opérateur 81 est positif, une borne de sortie de l'opérateur 81 est activée et est présentée à une borne d'entrée B du second opérateur 79 qui exécute la fonction de test de freinage TesterEtatfrein() déjà décrite ci-dessus. Il en résulte que, dans le cas où le test effectué par l'opérateur 81 est positif, c'est l'appui sur le frein qui exécute la demande de changement de rapport. Selon le résultat du test TesterEtatFrein() effectué par le second opérateur 80, les mêmes opérations ChangerRapport() et AlarmeB() sont effectuées par le moyen de décollage et les mêmes affichages sont effectuées par le contrôleur 16 de tableau de bord sur l'afficheur 76. On note cependant que le second opérateur 80 tient simplement compte pour son résultat négatif, de l'opérateur 79, 81 ou 82 qui a présenté seul une requête d'activation sur ses entrées A, B ou C.

Le moyen 75 de décollage du véhicule comporte aussi un opérateur 82 dont les bornes d'entrée reçoivent les informations précitées de situation de conduite, particulièrement les informations indiquées dans les variables d'état RapportEngagé et Evit, et qui exécute la fonction suivante :

```
 Si (RapportEngagé == "N") ET (Evit < Evit1) Alors
     TesterEtatFrein() ;
```

Quand le test effectué par cet opérateur 82 est positif, une borne de sortie de l'opérateur 82 est activée et est présentée à une borne d'entrée C du second opérateur 79 qui exécute la fonction de test de freinage TesterEtatfrein() déjà décrite ci-dessus. Il en résulte que, dans le cas où le test effectué par l'opérateur 82 est positif, c'est l'appui sur le frein qui exécute la demande de changement de rapport. Les mêmes fonctions sont réalisées que celles effectuées en relation avec l'opérateur 79 ou l'opérateur 81 déjà décrits. On notera seulement que le moyen de décollage 70 teste ici la vitesse du véhicule Evit par rapport à une valeur de vitesse Evit1 qui est définie comme une vitesse de manoeuvre.

Le moyen de décollage 70 comporte ensuite un module 83 qui est activé quand le sélecteur de mode est sur la position "Auto", c'est-à-dire quand le véhicule est en mode de transmission automatique et que la variable d'état Cmode vaut CmodeAuto lue sur le registre 30. Le module 83 comporte un premier organe de test 84 qui lit la variable d'état RapportEngagé et la variable d'état Evit lue sur le registre 35.

Le premier organe de test 84 comporte un opérateur qui exécute la fonction de test suivante :

```
 Si ( RapportEngagé == "N") ET ( Evit > Evit1)) Alors
     TestEtatFrein();
```

qui est semblable aux tests des opérateurs 79, 81 et 82. Une borne de sortie du premier organe de test 84 est connectée à une entrée convenable d'un second organe de test qui reçoit aussi la valeur en cours de la variable d'état Cfrein et qui exécute la même fonction que celle du second opérateur 80 du module de décollage 75. De ce fait, sans qu'il soit nécessaire de décrire plus avant la structure du second organe de test 85 du module 83, une première borne de sortie de ce second organe 85 exécute une fonction ChangerRapport() qui est exécutée vers le calculateur 6 comme précédemment, ou bien une seconde borne de sortie D de ce même second organe de test 85 exécute une fonction notée AlarmeX() (avec X = D) à destination du contrôleur de tableau de bord 16 et de l'afficheur 76 ainsi qu'il a déjaà été décrit.

Quand le module 83 est activé par le mode automatique, un organe de test 86 est aussi en fonction qui teste les variables d'état RapportEngagé, Evit de vitesse du véhicule, et Clevier d'état de commande du levier impulsionnel de changement de vitesses. Le module 86 comporte un opérateur qui exécute la fonction suivante :

```
 Si (
     (RapportEngagé EstDans {"2", "3", "4", "5"}) ET
     ((Clevier == Clevier+) OU (Clevier == Clevier-))
  ) Alors
 ChangerRapport();
 ChangerMode();
 Sinon
 Si (
     (RapportEngagé == "1 ") ET
     ((Clevier == Clevier+) OU (Clevier == Clevier-)) ET
     (Evit > Evit1)
  ) Alors
 ChangerRapport();
```

dans laquelle "EstDans" teste si le rapport de boîte est sur les rapports de "2" à "5", et les fonctions exécutées si le test est positif sont :
- ChangerRapport() identique à la fonction ChangerRapport() déjà décrite précédemment est exécutée sur la borne de sortie "E" de l'organe de test 86 ;
- ChangerMode(), une fonction qui, la variable d'état Cmode étant égale à CmodeAuto, la place à la valeur CmodeManuel en forçant le sélecteur de mode 29, et est exécutée sur la borne de sortie "F" de l'organe de test 86..

Quand le mode de transmission "Manuel" (ou semi-automatique ou impulsionnel) est actif, seul l'appui sur le sélecteur de mode 22 permet de revenir en mode de transmission automatique.

Enfin le moyen de test de changement de rapport 70 comporte un organe de test de changement de mode de transmission 87.

La sélection du mode d'adhérence en « faible adhérence » est réalisée quand la variable d'état descriptive de ce mode, Cadher, prend la valeur constante Cadher0. L'organe de test de changement de mode de transmission 87 lit donc le registre d'état de mode d'adhérence 33 et, quand on se trouve en mode automatique autorise n'est possible qu'en mode de transmission automatique. L'organe 87 comporte donc un opérateur qui exécute à sa sortie la fonction ChangerMode() décrite ci-dessus à destination du sélecteur de mode de transmission 29. Par conséquent, tout appui sur le sélecteur de mode d'adhérence 31 en mode de transmission manuel (Cmode == CmodeManuel) entraîne une entrée en mode automatique (Cmode == CmodeAuto) et l'application des stratégies relatives à ce mode particulier.

Toute action sur le levier de commande impulsionnelle 22 en même temps qu' une manoeuvre du sélecteur de mode de transmission 28 est prioritaire, l'appui sur le sélecteur de mode 28 n'étant pas pris en compte.

Toute demande de changement de rapport vers la position neutre (RapportEngagé = "N") nécessite un appui sur le frein, à l'arrêt comme en roulage (Cfrein == Cfrein1). Selon la vitesse du véhicule, la demande de changement de rapport au neutre N entraînera ou non une sortie du mode automatique.

Toute demande de changement de rapport vers la position « marche arrière » R nécessite un appui sur le frein (Cfrein == Cfrein1) et que la vitesse du véhicule soit suffisamment faible (Evit < Evit1) pour éviter tout craquement de boîte.

On trouve à la fin de la présente description deux tableaux décrivant respectivement l'état initial, puis l'état final des états possibles du dispositif de commande de la figure 1 dans un mode particulier de réalisation.

Chaque état E1 à E21 peut être pris par le moyen d'autorisation de changement de rapport 8 décrit à l'aide des figures 4 et suivantes qui sont décrits par huit variables d'état définies ci-dessus et qui sont au tableau de l'état initial (Tableau 1) :
- V :équivalente à la variable Evit plus haut ;
- EmoteurIni : équivalente à Emot mais lors de l'état initial avant un changement de rapport de boîte de vitesses ;
- Emodeini : équivalente à EMode mais lors de l'état initial avant un changement de rapport de boîte de vitesses ;
- Eboîteini : équivalente à RapportEngagé mais lors de l'état initial avant un changement de rapport de boîte de vitesses ;
- Clevier qui peut prendre une valeur notée "indifférent" qui signifie que les deux valeurs Clevier+ ou Clevier- produisent les mêmes effets sur le moyen d'autorisation de changement de rapport 8 ;
- Cfrein ;
- Cclé ;
- Cmode ; et
- Cadhérence.

Dans le tableau de l'état initial (Tableau 1 - Etat Initial), la valeur notée "inhibé", appliquée à une variable d'état (décrite dans la première ligne de chaque fraction du Tableau 1) indique que les valeurs que la variable prendrait ne sont de toute façon pas testées.

Dans le tableau suivant (Tableau 2 - Etat Final), les états E1 à E21 occupent chacun une ligne et on a décrit les variables d'état suivantes en colonnes :
- Emoteurfinal : équivalente à Emot pour l'état final après exécution des fonctions du moyen de l'invention ;
- Evoyantfrein : variable d'état qui contrôle les alarmes et affichages des situations de conduite associées à l'appui sur le frein ;
- Evoyantrapport : variable d'état qui contrôle les alarmes et affichages des situations de conduite associées à un changement de rapport de boîte de vitesses après exécution des fonctions du moyen de l'invention ;
- Emodefinal : valeur prise par la variable d'état Emode après exécution des fonctions du moyen de l'invention ;
- Eboîtefinal : valeur prise par la variable d'état RapportEngagé après exécution des fonctions du moyen de l'invention ;
- Eadhérence : valeur prise par la variable d'état Eadher après exécution des fonctions du moyen de l'invention.

On note que le moyen d'autorisation de changement de rapport 8 décrit à l'aide des figures 4 et suivantes peut être réalisé sous forme de logique câblée, ou sous forme de logique programmable avec un circuit intégré personnalisé, ou encore sous forme de programmes exécutés sur un ou plusieurs microcontrôleurs ou un et plusieurs microprocesseurs, ou encore sur un ou plusieurs circuits de traitement de signal. L'homme de métier saura adapter la description précédente à ces divers modes d'exécution.

### Avantages de l'invention

La gestion par un calculateur électronique d'un levier à une seule position stable et à commandes impulsionnelles couplé à un afficheur permet de :
- définir par logiciel des stratégies rendant l'utilisation de la commande conducteur intuitive,
- prémunir le véhicule de toute mauvaise manipulation de la commande conducteur,
- faire évoluer plus facilement les stratégies sans modifier la mécanique du levier de vitesse.

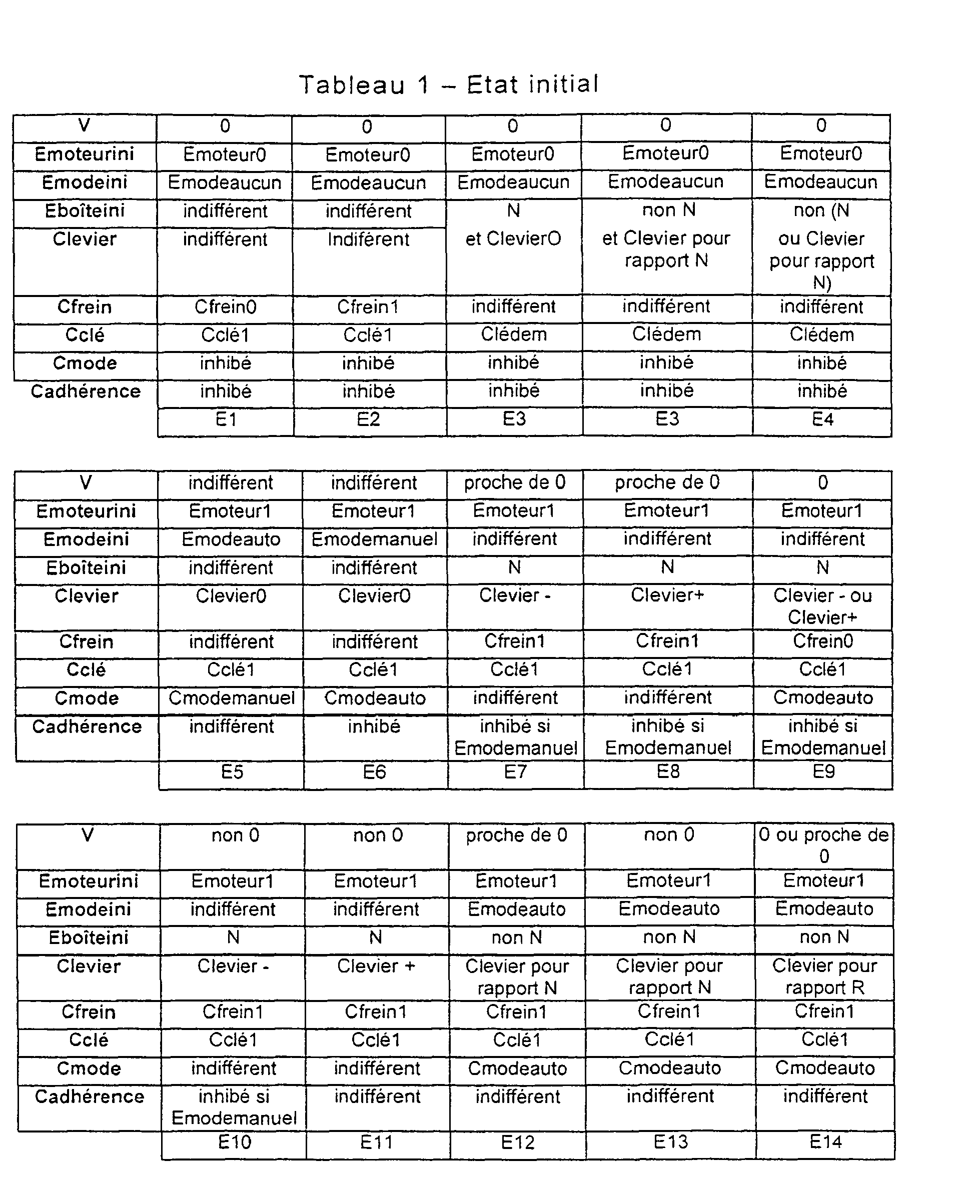

## Revendications

1. Dispositif de commande d'une transmission automatique pour véhicule automobile, du genre comprenant un moteur thermique (1) accouplé aux roues motrices du véhicule au moyen d'un embrayage piloté (2, 5) à l'aide d'un contrôleur d'embrayage (5) et d'une boîte de vitesses automatisée (3, 6), le dispositif de commande comportant :
- un calculateur (6) de boîte de vitesses automatisé ;
- une commande en mode impulsionnel (7) de la boîte de vitesses ; et
- un moyen (8) pour autoriser un changement de rapport de la boîte de vitesses demandé par le calculateur de boîte de vitesses automatisé et/ou par la commande en mode impulsionnel (7) de la boite de vitesses (3) en fonction des situations de conduite détectées par un moyen (9) de détection des situations de conduite ;
le moyen pour autoriser un changement de rapport de boîte de vitesses comportant une unité centrale (14) qui exécute un programme d'autorisation enregistré dans une mémoire de programmes (18) accessible en lecture par l'unité centrale (14) en fonction de situations de conduite préenregistrées dans une mémoire des autorisations (13) accessible en lecture par l'unité centrale (14) lorsqu'une demande de changement de rapport de boîte de vitesses est produite par le levier de commande manuelle impulsionnelle (7) lorsque la transmission travaille en mode manuel ou par le calculateur (6) de boite de vitesses travaillant en mode automatique. **caractérisé en ce que** le moyen de détection de situation de conduite comporte séparément ou en combinaison l'un des moyens suivants :
- un détecteur (20) de manoeuvre de la pédale de frein 19 qui agit sur le système de freinage du véhicule ;
- un détecteur (23) de commande manuelle impulsionnelle CMI de la position d'un levier de commande de changement de rapport (22) qui, en mode manuel, agit sur le changement de rapport de boîte de vitesses ;
- un détecteur (26) de position de la clé de contact (25) sur le démarreur et qui agit sur la mise sous tension des appareils électriques connectés à la batterie du véhicule après contact ;
- un détecteur (29) de l'état de commutation d'un sélecteur (28) de mode de commande du changement de rapports de la boîte de vitesses qui permet d'indiquer au dispositif de commande de l'invention si le conducteur commande la transmission dans un mode automatique où le calculateur de boîte de vitesses (6 - Figure 1) prend le contrôle du choix du rapport en mode automatique ou si le conducteur commande la transmission dans un mode manuel impulsionnel dans lequel il commande lui-même la décrémentation ou l'incrémentation de la séquence de changement de rapports de la boîte de vitesses, cette séquence de changement de rapports étant exécutée sous l'effet de la manipulation du levier (22) à une seule position stable "0" par le calculateur de boîte de vitesses (6 - Figure 1) dont le programme de fonctionnement en mode automatique a été préalablement inhibé pendant la durée de sélection du mode manuel impulsionnel par le sélecteur de mode (28) ; et
- un détecteur (32) de l'état de commutation d'un sélecteur (31) de mode de fonctionnement de la transmission automatique en mode "faible adhérence" ou en mode "adhérence normale" ;
en sorte que, quand il est manoeuvré, chacun des détecteurs ou capteurs précités ci-dessus produit une valeur prise parmi plusieurs valeurs prédéterminées qui est enregistrée comme indicatrice d'une situation de conduite dans un registre d'état pour être lu par l'unité centrale (14).

2. - Dispositif selon la revendication 1, **caractérisé en ce que** l'unité centrale (14) comporte un moyen pour exécuter, périodiquement ou de manière asynchrone en fonction des changements de situations de conduite un test pour déterminer si un changement de rapport de boîte de vitesses est autorisé pour un état de la situation de conduite en cours présentée dans un registre d'état (12) en comparant la situation de conduite en cours avec une situation de conduite autorisée préenregistrée dans la mémoire (13), et **en ce que** l'unité centrale (14) produit un signal d'autorisation de changement de rapport de boîte de vitesses qui est transmis à un moyen d'activation du calculateur (6) de boîte de vitesses de sorte qu'il soit activé si le test est positif, le signal d'autorisation étant aussi transmis au tableau de bord (16) pour signaler son état au conducteur et notamment pour produire une alarme si le test est négatif.

3. - Dispositif selon la revendication 1, **caractérisé en ce que** les registres d'état présentent chacun une valeur prise parmi les valeurs suivantes :
- le registre (21) d'état d'enfoncement de la pédale de frein qui prend l'une des valeurs <Cfrein0> indicatrice que la pédale de frein n'est pas actionnée ou <Cfrein1> indicatrice de l'enfoncement de la pédale de frein par le conducteur ;
- le registre (24) d'état de commande impulsionnelle du levier (22) qui prend l'une des valeurs <Clevier0> quand le levier n'est pas manipulé par le conducteur et qu'il est donc dans sa seule position stable "0", <Clevier+> ou <Clevier-> quand le levier est manipulé par le conducteur dans l'une des positions instables "+" ou "-" ;
- le registre (27) d'état de commande du démarreur (26) qui prend l'une des valeurs <Cclé0> quand le démarreur n'a pas encore été actionné, <Cclé1> quand le conducteur a manoeuvré la clé sur la position "plus avant contact" et <Cclédem> quand il a dépassé la position "plus avant contact" pour mettre le démarreur sous tension ;
- le registre (30) d'état de commande du sélecteur (31) de mode de commande de la transmission qui prend l'une des valeurs <CmodeAuto> quand le conducteur a sélectionné la position "Auto" du sélecteur (28) parce qu'il veut que le calculateur - (Figure 1) de changement de rapport de boîte de vitesses exécute le programme de changement automatique de rapport de boîte de vitesses qui y est enregistré, et c'est la valeur par défaut qui est présentée, et <CmodeManuel> quand le conducteur a choisi un mode manuel de fonctionnement dans lequel le changement de rapport de boîte de vitesses est déterminé par l'actionnement manuel du levier (22) ;
- le registre (33) d'état de commande du sélecteur (32) de mode d'adhérence de la transmission automatique qui prend l'une des valeurs <Cadher0> quand le sélecteur (32) a été placé en position "Normal" pour que la transmission travaille en adhérence normale, et c'est la valeur par défaut qui est présentée ou <Cadher1> quand le sélecteur (32) a été placé en position "Faible" pour obtenir le fonctionnement de la transmission dans un mode de faible adhérence, sur route mouillée ou sous verglas ;
- le registre (35) d'état de vitesse de déplacement du véhicule qui prend l'une des valeurs <Evit0> quand le véhicule est à l'arrêt, que le moteur soit en fonctionnement ("moteur tournant")
ou qu'il soit éteint, <Evit1> quand le véhicule avance à une allure réduite, par exemple lors du décollage du véhicule ou en manoeuvres de parking, et <Evit2> quand il se déplace à des vitesses de roulage ;
- le registre (37) d'état du régime moteur qui est mesuré en mesurant la vitesse de rotation de l'arbre de sortie du moteur thermique (1 - Figure 1), et qui prend les valeurs <Emot0> quand le moteur est à l'arrêt et <Emot1 > quand le moteur est "tournant" ; l'ensemble des valeurs prises étant, périodiquement ou de manière asynchrone en fonction des situations de conduite, scruté et analysé sur le registre d'entrée du moyen d'autorisation de changement de rapport (8 - Figure 1) au niveau de son registre d'entrée (12) qui maintient un vecteur de situation de conduite.

4. - Dispositif selon la revendication 3, **caractérisé en ce que** il comporte :
- un moyen (43) pour détecter l'état du moteur arrêté ;
- un premier moyen de test (44), activé par ledit moyen (43) pour détecter l'état du moteur arrêté, pour interdire un changement de mode entre un mode automatique et un mode de commande manuelle impulsionnelle ;
- un second moyen de test (51), activé par ledit moyen (43) pour détecter l'état du moteur arrêté, pour permettre le changement de rapport selon l'état du rapport engagé sur une liste déterminée de rapports engagés permis et produisant un signal d'alerte si le frein n'est pas appuyé.

5. - Dispositif selon la revendication 3, **caractérisé en ce que** il comporte un moyen de test d'autorisation (60) qui comporte :
- un opérateur de calcul (61) du rapport engagé en fonction de l'information de changement de rapport ;
- un opérateur (65) qui exécute une opération logique définie par: 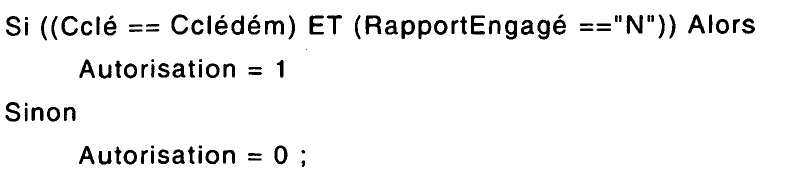
de sorte que l'opération de démarrage soit ou non autorisée (53) et/ou sons autorisation signalée (17, 6).

6. - Dispositif selon la revendication 2, **caractérisé en ce que** l'unité centrale (14) pour produire un signal d'autorisation de changement de rapport comporte un moyen de test (70) d'autorisation de changement de rapport de boîte de vitesses quand le moteur est tournant qui comporte un moyen (75) pour engager un rapport permettant de faire décoller le véhicule, le conducteur devant appuyer sur le frein.

7. - Dispositif selon la revendication 6, **caractérisé en ce que** le moyen (75) pour engager un rapport permettant de faire décoller le véhicule comporte :
- - un opérateur (79) qui exécute une opération logique définie par : 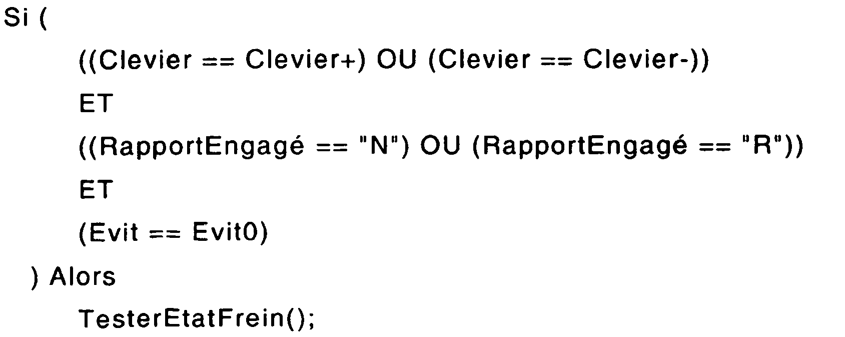
- un opérateur (81) qui exécute une opération logique définie par : 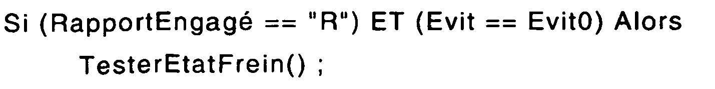
- un opérateur (82) qui exécute une opération logique définie par : 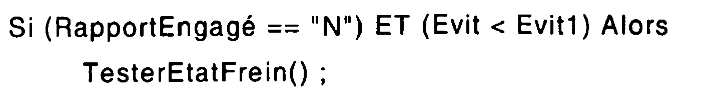
- un opérateur (80) dont au moins une entrée est connectée à l'un au moins des opérateurs (79, 81, 82) et qui exécute une opération logique définie par : 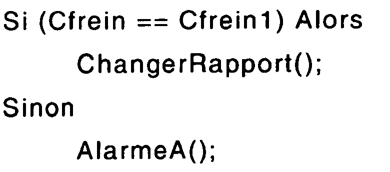
de sorte qu'une demande de changement de rapport soit produite par un appui sur la pédale de frein lorsque la vitesse du véhicule est détectée comme se trouvant dans une vitesse de manoeuvre et qu'une alarme (AlarmeX()) soit produite sinon.

8. - Dispositif selon la revendication 4, **caractérisé en ce que** le moyen de test (70) comporte un module (83) activé lorsque le sélecteur de mode est sur la position "Auto" qui comporte :
- un premier organe de test (84) qui exécute une opération logique définie par : 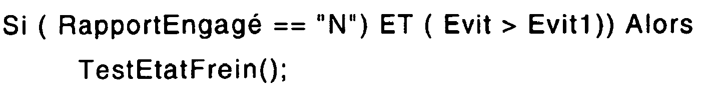
- un second organe de test (85) qui exécute une opération logique définie par : 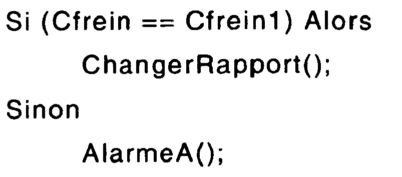 si le premier organe de test (84) a produit une réponse positive ;
- un organe de test (86) qui exécute une opération logique définie par :

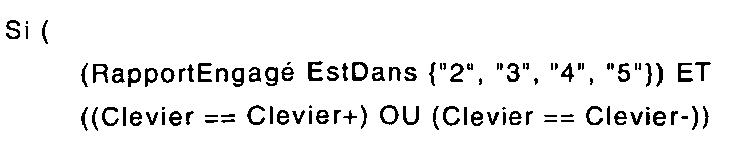

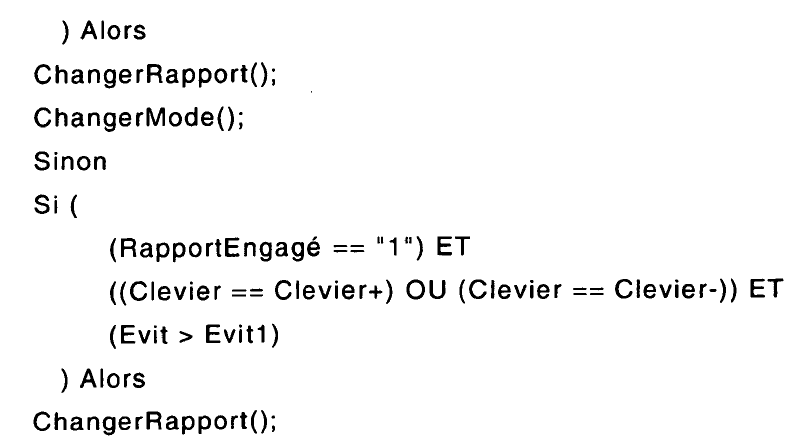

9. - Dispositif selon la revendication 3, **caractérisé en ce que** il comporte un organe de test de changement de mode de transmission qui, en fonction de l'état de la variable décrivant le mode d'adhérence, oblige au passage en mode automatique.

10. - Véhicule à transmission automatique du genre comportant une transmission automatique (3, 6), **caractérisé en ce qu'**il comporte de plus :
- un dispositif manuel (7) de changement de vitesses comportant un levier à une seule position stable à commande impulsionnelle ;
- un dispositif de commande (10) d'une transmission automatique défini selon au moins l'une des revendications précédentes.

## Claims

1. Device for controlling an automatic transmission for a motor vehicle, of the type comprising an internal combustion engine (1) coupled to the drive wheels of the vehicle by means of a clutch (2, 5) controlled with the aid of a clutch controller (5) and an automated gearbox (3, 6), the control device comprising:
- an automated gearbox computer (6);
- a pulse mode control (7) of the gearbox; and
- a means (8) for allowing a change of gearbox ratio requested by the automated gearbox computer and/or by the pulse mode control (7) of the gearbox (3) according to driving situations detected by a means (9) for detecting driving situations;
the means for allowing a change of gearbox ratio comprising a central processor unit (14) that runs an authorization program entered in a program memory (18) that can be accessed in read mode by the central processor unit (14) according to driving situations pre-entered in an authorizations memory (13) that can be accessed in read mode by the central processor unit (14) when a change of gearbox ratio request is generated by the manual pulse mode control lever (7) when the transmission is working in manual mode or by the gearbox computer (6) working in automatic mode,
**characterized in that** the means for detecting a driving situation comprises, separately or in combination, one of the following means:
- a detector (20) of an operation of the brake pedal (19) that acts on the braking system of the vehicle;
- a detector (23) of manual pulse mode control CMI of the position of a ratio change control lever (22) which, in manual mode, acts on the change of gearbox ratio;
- a detector (26) of the position of the ignition key (25) on the starter and that acts on the switching-on of the electric devices connected to the battery of the vehicle after contact;
- a detector (29) of the switching status of a gearbox ratio change control mode selector (28) that makes it possible to indicate to the control device of the invention whether the driver is commanding the transmission in an automatic mode in which the gearbox computer (6
- Figure 1) takes control of choosing the ratio in automatic mode or whether the driver is commanding the transmission in a manual pulse mode in which he himself controls the decrementation or incrementation of the gearbox ratio change sequence, this ratio change sequence being carried out under the effect of moving the lever (22) to a single stable position "0", by the gearbox computer (6 - Figure 1) whose automatic mode operating program has previously been disabled for the duration of selection of manual pulse mode by the mode selector (28); and
- a detector (32) of the switching status of operating mode selector (31) of an automatic transmission in "poor grip" mode or in "normal grip" mode;
such that, when it is operated, each of the abovementioned detectors or sensors produces a value taken from several predetermined values that is entered as an indicator of a driving situation in a status register to be read by the central processor unit (14).

2. Device according to Claim 1, **characterized in that** the central processor unit (14) comprises a means for running, periodically or asynchronously according to changes of driving situations, a test to determine whether a change of gearbox ratio is authorized for a status of the current driving situation presented in a status register (12) by comparing the current driving situation with an authorized driving situation pre-entered in the memory (13), and **in that** the central processor unit (14) produces a change of gearbox ratio authorization signal that is transmitted to a means for activating the gearbox computer (6) so that it is activated if the test is positive, the authorization signal also being transmitted to the dashboard (16) to indicate its status to the driver and particularly to produce an alarm if the test is negative.

3. Device according to Claim 1, **characterized in that** the status registers each have a value taken from the following values:
- the status register (21) of the depression of the brake pedal that takes one of the values <Cfrein0> indicating that the brake pedal is not actuated or <Cfrein1> indicating the depression of the brake pedal by the driver;
- the status register (24) of pulse control of the lever (22) that takes one of the values <Clevier0> when the lever is not moved by the driver and it is therefore in its single stable position "0", <Clevier+> or <Clevier-> when the lever is moved by the driver in one of the unstable positions "+" or "-";
- the status register (27) of the starter control (26) that takes one of the values <Cclé0> when the starter has not yet been actuated, <Cclé1> when the driver has moved the key to the "on" position and <Cclédem> when he has passed beyond the "on" position to energize the starter;
- the status register (30) of control of the transmission control mode selector (31) that takes one of the values <CmodeAuto> when the driver has selected the "Auto" position of the selector (28) because he wants the gearbox ratio change computer (Figure 1) to run the gearbox ratio automatic change program that is entered therein, and it is the default value that is presented, and <CmodeManuel> when the driver has chosen a manual operating mode in which the change of gearbox ratio is determined by the manual actuation of the lever (22);
- the status register (33) of control of the automatic transmission grip mode selector (32) that takes one of the values <Cadher0> when the selector (32) has been placed in the "Normal" position so that the transmission works in normal grip, and it is the default value that is presented or <Cadher1> when the selector (32) has been placed in the "Poor" position to obtain operation of the transmission in a poor grip mode, on a wet or icy road;
- the status register (35) of speed of movement of the vehicle that takes one of the values <Evit0> when the vehicle is stopped, whether the engine is on ("engine running") or whether it is switched off, <Evit1> when the vehicle is moving forward at a low speed, for example when the vehicle is starting off or in parking manoeuvres, and <Evit2> when it is moving at road speeds;
- the status register (37) of the engine speed that is measured by measuring the speed of rotation of the internal combustion engine output shaft (1 - Figure 1), and that takes the values <Emot0> when the engine is off and <Emot1> when the engine is "running"; all the values taken being, periodically or asynchronously depending on the driving situations, scanned and analyzed on the input register of the ratio change authorization means (8 - Figure 1) in its input register (12) that maintains a driving situation vector.

4. Device according to Claim 3, **characterized in that** it comprises:
- a means (43) for detecting the engine off status;
- a first test means (44), activated by said means (43) for detecting the engine off status, to prohibit a change of mode between an automatic mode and a manual pulse control mode;
- a second test means (51), activated by the said means (43) to detect the engine off status, to allow the change of ratio according to the state of the ratio engaged from a determined list of permitted engaged ratios and producing an alarm signal if the brake is not pressed.

5. Device according to Claim 3, **characterized in that** it comprises an authorization test means (60) that comprises:
- a computation operator (61) of the engaged ratio according to the ratio change information;
- an operator (65) that executes a logic operation defined by: 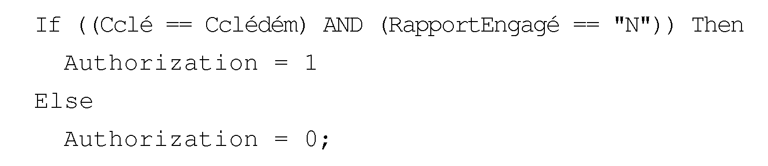
so that the starting operation may or may not be authorized (53) and/or its authorization indicated (17, 6).

6. Device according to Claim 2, **characterized in that** the central processor unit (14) for producing a ratio change authorization signal comprises a test means (70) for authorizing a change of gearbox ratio when the engine is running that comprises a means (75) for engaging a ratio making it possible to cause the vehicle to start moving, the driver having to press the brake.

7. Device according to Claim 6, **characterized in that** the means (75) for engaging a ratio making it possible to cause the vehicle to start moving comprises:
- an operator (79) that executes a logic operation defined by: 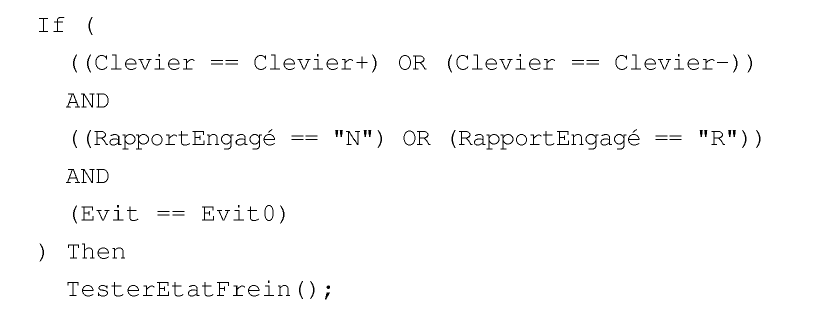
- an operator (81) that executes a logic operation defined by: 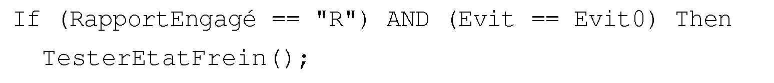
- an operator (82) that executes a logic operation defined by: 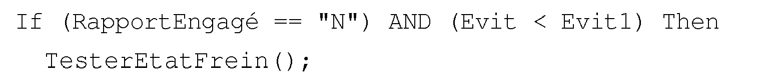
- an operator (80) of which at least one input is connected to at least one of the operators (79, 81, 82) and that executes a logic operation defined by: 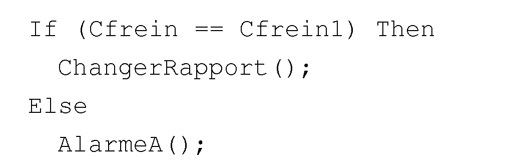
so that a ratio change request is generated by pressing on the brake pedal when the vehicle speed is detected as being at a manoeuvring speed and an alarm (AlarmeX()) is generated otherwise.

8. Device according to Claim 4, **characterized in that** the test means (70) comprises a module (83) activated when the mode selector is in the "Auto" position that comprises:
- a first test member (84) that executes a logic operation defined by: 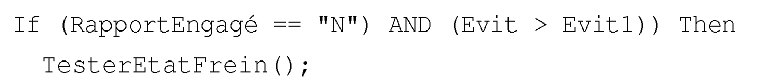
- a second test member (85) that executes a logic operation defined by: 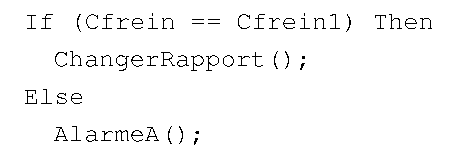 if the first test member (84) has generated a positive response;
- a test member (86) that executes a logic operation defined by:

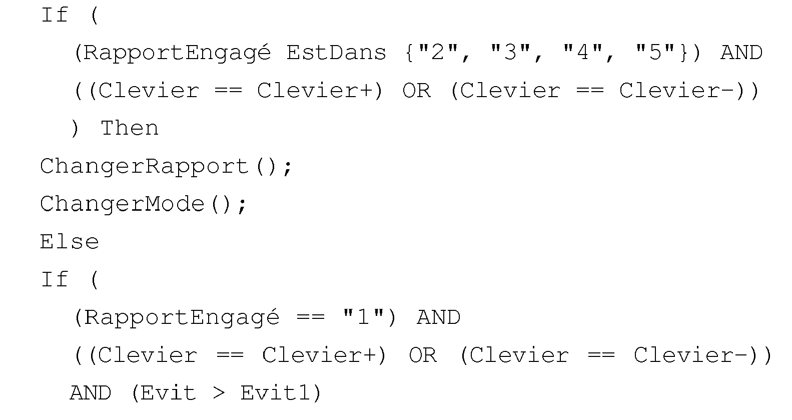

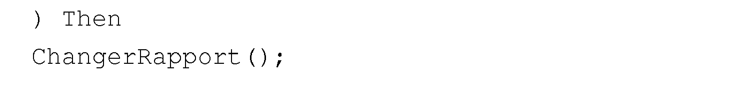

9. Device according to Claim 3, **characterized in that** it comprises a transmission mode change test member which, according to the status of the variable describing the grip mode, forces the transition to automatic mode.

10. Vehicle with automatic transmission of the type comprising an automatic transmission (3, 6), **characterized in that** it also comprises:
- a manual device (7) for changing speeds comprising a lever with a single stable pulse control position;
- a control device (10) of an automatic transmission defined according to at least one of the preceding claims.

## Patentansprüche

1. Steuereinrichtung für ein automatisches Getriebe eines Kraftfahrzeugs der Art, die einen Thermomotor (1) umfasst, welcher mittels einer mit Hilfe eines Kupplungsschalters (5) und eines automatisierten Getriebes (3, 6) gesteuerten Kupplung (2, 5) mit den Antriebsrädern des Fahrzeugs gekoppelt ist, wobei die Steuereinrichtung Folgendes umfasst:
- einen Rechner (6) des automatisierten Getriebes;
- eine Impulssteuerung (7) des Getriebes; und
- ein Mittel (8) zum Zulassen einer Gangänderung des Getriebes, welche durch den Rechner des automatisierten Getriebes und/oder durch die Impulssteuerung (7) des Getriebes (3) in Abhängigkeit von durch ein Mittel (9) zum Erfassen von Fahrsituationen erfassten Fahrsituationen angefordert wird;
wobei das Mittel zum Zulassen einer Gangänderung des Getriebes eine Zentraleinheit (14) umfasst, welche in Abhängigkeit von vorher in einem Zulassungsspeicher (13), aus dem die Zentraleinheit (14) lesen kann, eingetragenen Fahrsituationen ein in einem Programmspeicher (18), aus dem die Zentraleinheit (14) lesen kann, gespeichertes Programm zum Zulassen ausführt, wenn im manuellen Modus des Getriebes der Hebel der manuellen Impulssteuerung (7) oder im automatischen Modus des Getriebes der Rechner (6) des Getriebes eine Anforderung zur Gangänderung des Getriebes erzeugt,
**dadurch gekennzeichnet, dass** das Mittel zum Erfassen der Fahrsituationen einzeln oder in Kombination die folgenden Mittel umfasst:
- einen Detektor (20) der Betätigung des Bremspedals (19), welches auf das Bremssystem des Fahrzeugs wirkt;
- einen Detektor (23) der manuellen Impulssteuerung CMI der Position eines Steuerhebels zur Gangänderung (22), welcher im manuellen Modus auf die Gangänderung des Getriebes wirkt;
- einen Detektor (26) der Position des Zündschlüssels (25) an dem Anlasser, der auf die Anlegung von Spannung auf die mit der Fahrzeugbatterie verbundenen elektrischen Vorrichtungen nach dem Anlassen wirkt;
- einen Detektor (29) des Schaltzustands eines Modusauswählers (28) zum Steuern der Gangänderung des Getriebes, welcher es ermöglicht, der erfindungsgemäßen Steuereinrichtung anzuzeigen, ob der Fahrer das Getriebe in einem automatischen Modus steuert oder ob der Rechner des Getriebes (6, Figur 1) im automatischen Modus die Steuerung über die Gangauswahl ausübt oder ob der Fahrer das Getriebe in einem manuellen Impulsmodus steuert, in dem er selbst die Dekrementierung oder Inkrementierung der Sequenz der Gangänderung des Getriebes steuert, wobei diese Sequenz der Gangänderung unter Einwirkung der Betätigung des Hebels (22) in einer einzigen stabilen Position "0" durch den Rechner des Getriebes (6, Figur 1) erfolgt, dessen Funktionsprogramm im automatischen Modus zuvor während der Dauer der Auswahl des manuellen Impulsmodus durch den Modusauswähler (28) verhindert war; und
- einen Detektor (32) des Schaltzustands eines Auswählers (31) des Funktionsmodus des automatischen Getriebes im Modus "wenig Haftung" oder im Modus "normale Haftung"; so dass bei Betätigung jeder der oben erwähnten Detektoren oder Sensoren einen unter mehreren vorgegebenen Werten ausgewählten Wert erzeugt, der als Anzeige einer Fahrsituation in ein Zustandsregister eingetragen wird, damit er von der Zentraleinheit (14) gelesen werden kann.

2. Einrichtung nach Anspruch 1, **dadurch gekennzeichnet, dass** die Zentraleinheit (14) ein Mittel zum Ausführen auf periodische oder, in Abhängigkeit von Änderungen der Fahrsituationen, asynchrone Weise eines Tests zum Bestimmen umfasst, ob eine Gangänderung des Getriebes für einen Zustand der aktuellen Fahrsituationen zulässig ist, die in einem Zustandsregister (12) präsentiert wird, indem die aktuelle Fahrsituation mit einer vorher in dem Speicher (13) eingetragenen zugelassenen Fahrsituation verglichen wird, und **dadurch**, dass die Zentraleinheit (14) ein Signal zum Zulassen der Gangänderung des Getriebes erzeugt, welches an ein Mittel zum Betätigen des Rechners (6) des Getriebes gesendet wird, so dass es aktiviert wird, wenn der Test positiv ist, wobei das Zulassungssignal auch zum Armaturenbrett (16) gesendet wird, um dem Fahrer den Zustand zu signalisieren und insbesondere einen Alarm zu erzeugen, wenn der Test negativ ist.

3. Einrichtung nach Anspruch 1, **dadurch gekennzeichnet, dass** die Zustandseintragungen jeweils einen den folgenden Werten entnommenen Wert darstellen:
- das Zustandsregister (21) des Betätigens des Bremspedals, das einen der Werte <CBremse0>, welcher anzeigt, dass das Bremspedal nicht betätigt ist, oder <CBremse1>, welches anzeigt, dass das Bremspedal von dem Fahrer betätigt wird, annimmt;
- das Zustandsregister (24) der Impulssteuerung des Hebels (22), das einen der Werte <CHebe10>, wenn der Hebel durch den Fahrer nicht betätigt wird und somit in seiner einzigen stabilen Position "0" ist, <CHebel+> oder <CHebel->, wenn der Hebel durch den Fahrer in einer seiner instabilen Positionen "+" oder "-" betätigt wird, annimmt;
- das Zustandsregister (27) der Steuerung des Anlassers (26), das einen der Werte <CSchlüsse10>, wenn der Anlasser noch nicht betätigt wurde, <CSchlüssel1>, wenn der Fahrer den Schlüssel in die "Mehr Vorwärtskontakt" betätigt hat, und <CSchlüsselAnl>, wenn er die Position "Mehr Vorwärtskontakt" verlassen hat, um den Anlasser unter Spannung zu setzen, annimmt,
- das Zustandsregister (30) der Steuerung des Auswählers (31) des Steuermodus des Getriebes, das einen der Werte <CModusAuto>, wenn der Fahrer die Position "Auto" des Auswählers (28) ausgewählt hat, weil er wünscht, dass der Rechner (Figur 1) der Gangänderung des Getriebes das Programm der automatischen Gangänderung des Getriebes, welches dort eingetragen ist, ausführt, und der dargestellte der voreingestellte Wert ist, und <CModusManuell>, wenn der Fahrer einen manuellen Funktionsmodus ausgewählt hat, in dem die Gangänderung des Getriebes durch die manuelle Betätigung des Hebels (22) bestimmt wird, annimmt;
- das Zustandsregister (33) der Steuerung des Auswählers (32) des Haftungsmodus des automatischen Getriebes, das einen der Werte <CHaft0>, wenn der Auswähler (32) in die Position "Normal" gebracht wurde, damit das Getriebe bei normaler Haftung betrieben wird, und der dargestellte der voreingestellte Wert ist, oder <CHaft1>, wenn der Auswähler (32) in die Position "Schwach" gebracht wurde, um auf einer feuchten oder mit Glatteis bedeckten Straße einen Betrieb des Getriebes in einem Modus mit schwacher Haftung zu erzielen, annimmt;
- das Zustandsregister (35) der Bewegungsgeschwindigkeit des Fahrzeugs, das einen der Werte <EGesch0>, wenn das Fahrzeug stillsteht, unabhängig davon, ob der Motor im Betrieb ist ("drehender Motor") oder hält, <EGesch1>, wenn sich das Fahrzeug bei geringer Geschwindigkeit vorwärts bewegt, beispielsweise beim Starten des Fahrzeugs oder bei Parkmanövern, und <EGesch2>, wenn sich das Fahrzeug bei Fahrgeschwindigkeit bewegt, annimmt;
- das Zustandsregister (37) des Motorbetriebs, welcher durch Messen der Drehzahl der Ausgangswelle des Thermomotors (1, Figur 1) gemessen wird, und das die Werte <EMot0>, wenn der Motor stillsteht, und <EMot1>, wenn sich der Motor "dreht", annimmt, wobei die Gesamtheit der angenommenen Werte periodisch oder, in Abhängigkeit von den Fahrsituationen, asynchron in dem Eingangsregister des Mittels zum Zulassen der Gangänderung (8, Figur 1) in seinem Eingangsregister (12), welches einen Vektor der Fahrsituation führt, überprüft und analysiert wird.

4. Einrichtung nach Anspruch 3, **dadurch gekennzeichnet, dass** sie Folgendes umfasst:
- ein Mittel (43) zum Erfassen des Zustands des stillstehenden Motors;
- ein erstes Testmittel (44), das von dem Mittel (43) zum Erfassen des Zustands des stillstehenden Motors betätigt wird, um eine Modusänderung zwischen einem automatischen Modus und einem Modus der manuellen Impulssteuerung zu verhindern;
- ein zweites Testmittel (51), das durch das Mittel (43) zum Erfassen des Zustands des stillstehenden Motors betätigt wird, um die Gangänderung gemäß des eingelegten Ganges aus einer bestimmten Liste zugelassener eingelegter Gänge zuzulassen, und das ein Alarmsignal erzeugt, wenn die Bremse nicht betätigt wird.

5. Einrichtung nach Anspruch 3, **dadurch gekennzeichnet, dass** sie ein Testmittel des Zulassens (60) umfasst, welches Folgendes umfasst:
- einen Rechner zum Berechnen (61) des eingelegten Ganges in Abhängigkeit der Information der Gangänderung;
- einen Rechner (65), der eine logische Operation ausführt, welche definiert wird durch: 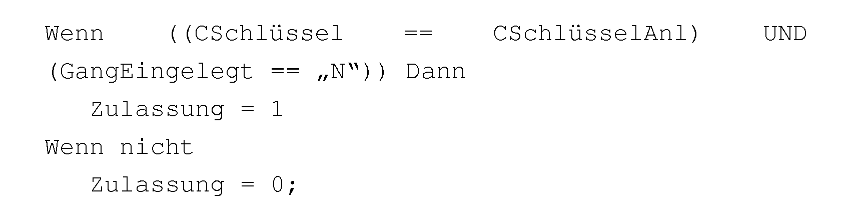
so dass der Vorgang des Anlassens gegebenenfalls zugelassen wird (53) und/oder es wird ein Zulassungston signalisiert (17, 6).

6. Einrichtung nach Anspruch 2, **dadurch gekennzeichnet, dass** die Zentraleinheit (14) zum Erzeugen eines Signals über die Zulassung der Gangänderung ein Testmittel (70) der Zulassung der Gangänderung des Getriebes aufweist, wenn sich der Motor dreht, welches ein Mittel (75) zum Einlegen eines Ganges umfasst, welches das Startenlassen des Fahrzeugs gestattet, wobei der Fahrer die Bremse betätigen muss.

7. Einrichtung nach Anspruch 6, **dadurch gekennzeichnet, dass** das Mittel (75) zum Einlegen eines Ganges, welches das Startenlassen des Fahrzeugs ermöglicht, Folgendes umfasst:
- einen Rechner (79), der eine logische Operation ausführt, welche definiert wird durch: 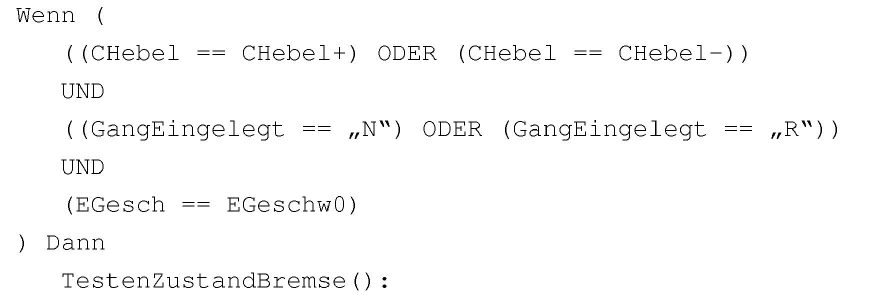
- einen Rechner (81), der eine logische Operation ausführt, welche definiert wird durch: 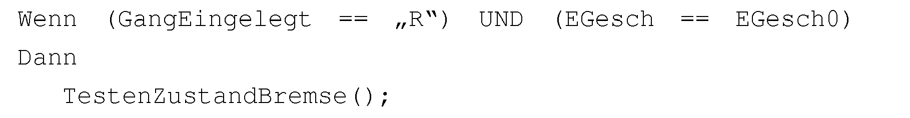
- einen Rechner (82), der eine logische Operation ausführt, welche definiert wird durch: 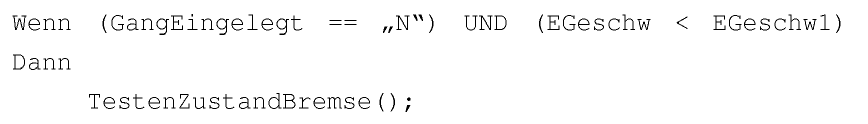
- einen Rechner (80), von dem mindestens ein Eingang mit mindestens einem der Rechner (79, 81, 82) verbunden ist und der eine logische Operation ausführt, die definiert ist durch: 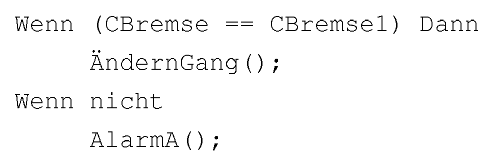
so dass eine Anforderung zur Gangänderung durch ein Drücken des Bremspedals erzeugt wird, wenn die Geschwindigkeit des Fahrzeugs als eine Geschwindigkeit erfasst wird, die sich im Bereich einer Manövriergeschwindigkeit befindet, und so dass, wenn dies nicht der Fall ist, ein Alarm (AlarmX()) erzeugt wird.

8. Einrichtung nach Anspruch 4, **dadurch gekennzeichnet, dass** das Testmittel (70) ein Modul (83) umfasst, das betätigt wird, wenn sich der Modusauswähler in der Position "Auto" befindet, und das Folgendes umfasst:
- ein erstes Testelement (84), welches eine logische Operation ausführt, die definiert ist durch: 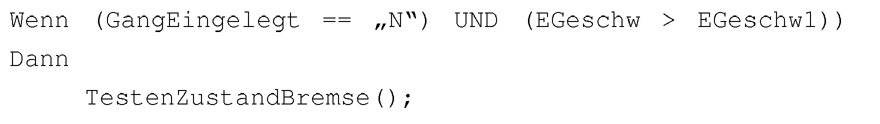
- ein zweites Testelement (85), welches eine logische Operation ausführt, die definiert ist durch: 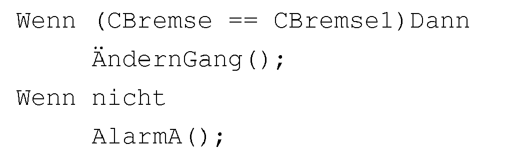 wenn das erste Testelement (84) eine positive Antwort erzeugt hat;
- ein Testelement (86), welches eine logische Operation ausführt, die definiert ist durch:

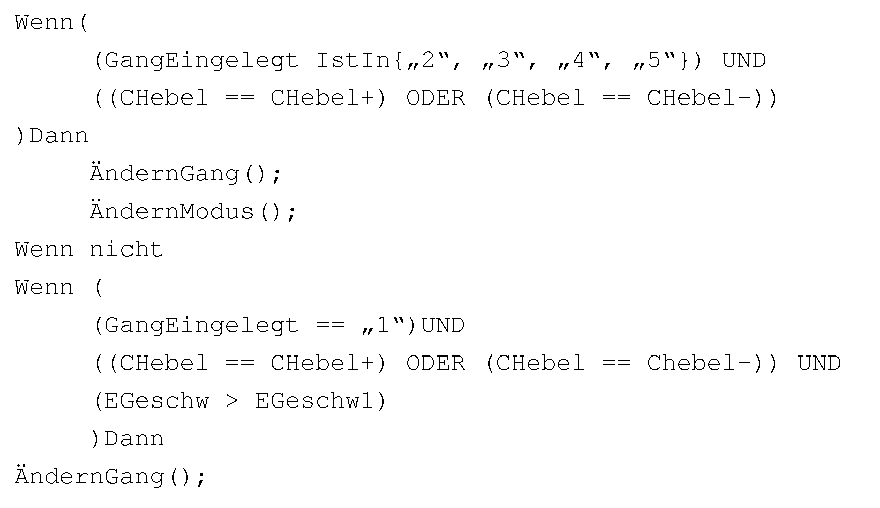

9. Einrichtung nach Anspruch 3, **dadurch gekennzeichnet, dass** sie ein Testelement der Änderung des Modus des Getriebes umfasst, die in Abhängigkeit des Zustands der den Haftungsmodus beschreibenden Variablen, einen Übergang zum automatischen Modus erzwingt.

10. Fahrzeug mit automatischem Getriebe der Art, die ein automatisches Getriebe (3, 6) umfasst, **dadurch gekennzeichnet, dass** es ferner Folgendes umfasst:
- manuelle Einrichtung (7) zum Ändern der Geschwindigkeit, umfassend einen Hebel mit einer einzigen stabilen Position mit Impulssteuerung;
- Steuereinrichtung (10) eines automatischen Getriebes, welche nach mindestens einem der vorhergehenden Ansprüche definiert ist.
